# EUROPÄISCHE PATENTSCHRIFT

(11) **EP 0 624 756 B1**
(45) Veröffentlichungstag und Bekanntmachung des Hinweises auf die Patenterteilung: **05.02.1997**
(21) Anmeldenummer: 94107353.8
(22) Anmeldetag: 11.05.1994
(51) Int. Cl.: F23N 3/00, F24D 12/02

(54) **Verfahren zum Steuern und/oder Regeln einer mit einem Feststoffkessel ausgerüsteten Heizungsanlage**
Method for controlling a heating system equipped with solid fuel burner
Procédé pour commander une installation de chauffage équipée avec une chaudière à combustible solide

(30) Priorität: 14.05.1993 DE 4316182
(43) Veröffentlichungstag der Anmeldung: 17.11.1994
(73) Patentinhaber: Künzel, Haiko Paul, D-25462 Rellingen (DE)
(72) Erfinder: Künzel, Haiko Paul, D-25462 Rellingen (DE)
(74) Vertreter: Richter, Werdermann & Gerbaulet

(56) Entgegenhaltungen:
- EP-A- 0 088 358
- EP-A- 0 343 660
- EP-A- 0 375 494
- EP-A- 0 519 178
- DE-A- 4 137 778
- US-A- 4 365 742

## Beschreibung

Die Erfindung bezieht sich auf das Gebiet der Heizungstechnik und betrifft ein Verfahren zum Steuern und/oder Regeln einer mit einem Feststoffkessel ausgerüsteten Heizungsanlage, in welchem Feststoffkessel durch Verbrennung eines Festbrennstoffes, vorzugsweise Holz, unter Zuführung von Primärluft und unter Bildung von Abgas, Kesselwasser und/oder Ausblasluft mit einer bestimmten Nutztemperatur erzeugt wird.

Aus der EP-A- 34 36 60 ist ein Verfahren zum Steuern und/oder Regeln einer mit einem Feststoffkessel ausgerüsteten Heizungsanlage, in welchem Feststoffkessel durch Verbrennung eines Festbrennstoffes, vorzugsweise Holz, unter Zuführung von Primärluft und unter Bildung von Abgas Kesselwasser mit einer bestimmten Nutztemperatur erzeugt wird. Der Istwert der Abgastemperatur wird von einem Abgasfühler gemessen. Die Verbrennung im Feststoffkessel wird so geregelt, daß ein vorgegebener Sollwert der Abgastemperatur erreicht wird. Hierbei handelt es sich um eine Zweipunktregelung.

Feststoffbefeuerte Heizgeräte sind in den verschiedensten Ausführungen bekannt. So ist auch bereits ein Kessel mit einem Brenner für eine, insbesondere mit Holz arbeitende Feststoffbefeuerung vorgeschlagen worden, der einen Wärmetauscher zur Erhitzung von Wasser sowie einen Brennstoffraum und eine darunter angeordnete, durch den Brenner abgeteilte Verbrennungskammer aufweist. In einer Gehäusewandung ist dabei ein Gebläse vorgesehen, das dem Brennstoffraum Luft zuführt. Der Brenner besteht aus einem im Kessel horizontal angeordneten Brennerstein, welche eine zur Ausbildung einer Vergasungszone den Brennstoffraum mit einer Verbrennungskammer verbindenden Durchbrechung aufweist. Das Gebläse führt dabei geregelt dem Brennstoffraum Primärluft und dem Brenner im Bereich der Durchbrechung Sekundärluft zu (EP-A-0 268 208).

Es ist im übrigen weiterhin bekannt, zur Zündung des Festbrennstoffes in einem solchen Feststoffkessel, insbesondere zur Zündung von Holz, eine elektrisch betriebene Zündeinrichtung vorzusehen, welche zur Erzeugung eines in den Brennstoffraum gerichteten Heißluftstrahls eine mit einem Gebläse zusammenwirkende elektrische Heizeinrichtung aufweist (DE-Gbm 91 07 850.4).

Holz ist jedoch beispielsweise ein Festbrennstoff, der bekanntlich nicht gleichmäßig abbrennt: Nach dem Auflegen von frischem Brennstoff setzt eine starke Gasentwicklung ein, die bei fortschreitendem Verbrennungsvorgang langsam nachläßt, so daß beim Ausbrand nur noch Holzkohle, fast vergleichbar mit Koks, brennt. Diesem Verbrennungsverlauf entsprechend gibt ein mit Holz befeuerter Feststoffkessel eine in der Regel unerwünschte, zeitlich veränderliche Leistung ab. Darüber hinaus ergibt sich aus der zeitlich veränderlichen Gasbildung eine variierende Abgaszusammensetzung, die zu erhöhten Abgasemissionen führen kann.

Es ist daher Aufgabe der Erfindung, ein Verfahren zum Steuern und/oder Regeln eines vorwiegend mit Holz befeuerten Feststoffkessels anzugeben, welches über die ganze Brenndauer des aufgelegten Holzes einen gleichmäßigen Abbrand und damit eine gleichmäßige Wärmeleistung des Kessels ermöglicht.

Die Aufgabe wird bei einem Verfahren der eingangs genannten Art dadurch gelöst, daß der Istwert der Abgastemperatur bemessen wird, und daß die Verbrennung im Feststoffkessel so geregelt wird, daß gemäß dem kennzeichen des Anspruchs 1 ein vorgegebener Sollwert der Abgastemperatur erreicht und eingehalten wird.

Der Erfindung liegt die Erkenntnis zugrunde, daß die Abgastemperatur ein direktes Maß für die Leistung des Kessels ist. Über die Einhaltung einer bestimmten Abgastemperatur durch Regelung der Verbrennung kann so eine ganz bestimmte Leistung des Wärmeerzeugers eingestellt werden.

Die Nutztemperatur, d.h., die Temperatur des Kesselwassers (bei einer Warmwasserheizung) bzw. die Temperatur der Ausblasluft (bei einer Warmluftheizung) zeigt an, ob die vom Kessel erzeugte Leistung ausreicht, zu gering oder zu hoch ist. Bei Nichterreichen des Sollwertes der Nutztemperatur ist die Leistung zu gering, bei Überschreiten zu hoch und gerade richtig, wenn der Sollwert erreicht und gehalten wird.

Gemäß einer ersten bevorzugten Ausführungsform des erfindungsgemäßen Verfahrens wird daher der Istwert der Nutztemperatur gemessen, und bei fortdauernden Abweichungen des Istwertes der Nutztemperatur von einem vorgegebenem Sollwert nach unten bzw. oben der Sollwert der Abgastemperatur erhöht bzw. erniedrigt. Hierdurch wird die vom Kessel abgegebene Leistung bedarfsgerecht so eingestellt, daß die Nutztemperatur erreicht und gehalten wird.

Die für die Leistungsregelung notwendige Regelung der Verbrennung im Kessel geht davon aus, daß die vom Kessel abgegebene Leistung von der erzeugten Gasmenge des Brennholzes abhängig ist, und daß diese Gasmenge durchmehr oder weniger starkes Anfachen des brennenden Holzes im Brennstoffraum, d.h. durch die Zuführung von mehr oder weniger Primärluft, gesteuert werden kann. Gemäß einer zweiten bevorzugten Ausführungsform des erfindungsgemäßen Verfahrens wird daher zur Regelung der Verbrennung im Feststoffkessel die Menge der zugeführten Primärluft verändert, d.h., nach Maßgabe des gemessenen Istwertes der Abgastemperatur wird die Primärluftmenge eingestellt.

Eine dritte bevorzugte Ausführungsform des erfindungsgemäßen Verfahrens zeichnet sich dadurch aus, daß zur Nachverbrennung unverbrannter Brenngase dem Feststoffkessel zusätzlich Sekundärluft zugeführt wird, daß die Sauerstoffkonzentration im Abgas gemessen wird, und daß bei einer andauernden Abweichung des Istwertes der Sauerstoffkonzentration von einem vorgegebenen Sollwert nach unten bzw. oben die Zufuhr von Sekundärluft erhöht bzw. erniedrigt wird.

Dies bedeutet, daß die zugeführte Verbrennungsluft dem jeweiligen Brennstadium optimal angepaßt wird: Die Verbrennungsluft insgesamt wird in Primär- und Sekundärluft unterteilt. Bei der anfänglichen starken Gasentwicklung wird nur eine sehr geringe Primärluftmenge benötigt, um die für eine vorbestimmte Leistung erforderliche Gasmenge freizusetzen.

Da die Verbrennung in diesem Stadium überwiegend in einer nachgelagerten Brennzone stattfindet, wird eine sehr große Menge an Sekundärluft benötigt. Später, wenn das Holz ausgegast ist und nur noch Holzkohle brennt, findet die Verbrennung fast nur noch im Brennstoffraum statt, und es wird fast nur noch Primärluft benötigt. In der gesamten Abbrandphase gibt es alle Zwischenstadien zwischen diesen beiden Extremen, die zudem ständigen Schwankungen unterworfen sind.

Gleichwohl wird mit einer Regelung von Primär- und Sekundärluft nach Maßgabe der Sauerstoffkonzentration im Abgas erreicht, daß die Verbrennung vollständig ist und nur minimale Schadstoffemissionen frei werden.

Durch das Zusammenwirken der ersten beiden Ausführungsformen kann die Leistung des Kessels schnell, frühzeitig und vorausschauend dem Bedarf angepaßt werden. Mit der dritten Ausführungsform wird ständig, über die ganze Abbrandphase, eine vollständige, saubere und mit höchstmöglicher Holzausnutzung arbeitende Holzverbrennung sichergestellt.

Eine vierte bevorzugte Ausführungsform des erfindungsgemäßen Verfahrens ist dadurch gekennzeichnet, daß zum Anwerfen des Feststoffkessels der Festbrennstoff elektrisch gezündet wird, und daß der Zündvorgang beendet wird und die Verbrennungsregelung einsetzt, wenn der Istwert der Abgastemperatur das Vorliegen einer selbständigen Verbrennung anzeigt. Hierdurch kann eine automatische, voreinstellbare Zündung erzielt werden, die eine Fehlzündung sowie eine Überlastung der Zündeinrichtung sicher vermeidet.

Gemäß einer fünften bevorzugten Ausführungsform des erfindungsgemäßen Verfahrens wird zum Speichern der im Feststoffkessel erzeugten Wärmeenergie ein mit wenigstens einem Temperaturfühler ausgestatteter, aufladbarer Pufferspeicher verwendet, die Ist-Temperatur im Pufferspeicher fortlaufend gemessen, und nach Maßgabe der Ist-Temperatur die Aufladung des Pufferspeichers gesteuert und/oder der Sollwert der Abgastemperatur eingestellt. Hierdurch läßt sich eine besonders flexible und sehr effiziente Arbeitsweise der Heizanlage realisieren.

Eine sechste bevorzugte Ausführungsform des erfindungsgemäßen Verfahrens zeichnet sich dadurch aus, daß neben dem Feststoffkessel wenigstens ein weiterer Kessel, vorzugsweise ein Oel/Gaskessel, verwendet wird, wobei die wenigstens zwei Kessel an denselben Kamin angeschlossen sind, daß der Betrieb des weiteren Kessels nach Maßgabe des Betriebszustandes des Feststoffkessels erfolgt, wobei der weitere Kessel nur dann eingeschaltet wird, wenn die gemessene Abgastemperatur am Feststoffkessel anzeigt, daß der Feststoffkessel ausgeschaltet ist, daß die Stellung einer Fülltür am Feststoffkessel überwacht wird, und daß der weitere Kessel abgeschaltet wird, wenn die gemessene Abgastemperatur am Feststoffkessel einen vorgegebenen Wert überschreitet und/oder die Fülltür als offenstehend gemeldet wird. Mit einer derartig erweiterten Regelung können leicht die Vorschriften erfüllt werden, welche den Betrieb jeweils nur einer Feuerstätte an einem Kamin festlegen und zugleich eine ausreichende Eigensicherheit verlangen.

Die Vorrichtung zur Durchführung des Verfahrens umfaßt einen Feststoffkessel mit einem Brennstoffraum zur Aufnahme des Festbrennstoffes und einem Brenner zur Verbrennung des Festbrennstoffes, erste Mittel zur Beeinflussung der Verbrennung im Brenner, ein Abgasrohr, durch welches der Feststoffkessel an einen Kamin angeschlossen ist, und zweite Mittel zur Abführung und Weiterleitung der im Feststoffkessel erzeugten Wärmeenergie, und ist dadurch gekennzeichnet, daß im Abgasrohr ein Abgastemperaturfühler angeordnet ist, daß der Abgastemperaturfühler an eine Steuerung angeschlossen ist, und daß die Steuerung mit den ersten Mitteln zur Beeinflussung der Verbrennung in Wirkverbindung steht.

Eine erste bevorzugte Ausführungsform der Vorrichtung ist dadurch gekennzeichnet, daß die ersten Mittel eine Einrichtung für die Zufuhr von Primärluft zum Brennstoffraum, vorzugsweise ein Primärluftgebläse, umfassen, daß die zweiten Mittel zur Abführung und Weiterleitung der im Feststoffkessel erzeugten Wärmeenergie einen Wassermantel oder Luftmantel umfassen, welcher den Feststoffkessel mantelartig umgibt, und daß in thermischem Kontakt mit dem Wassermantel oderdem Luftmantel ein Kesseltemperaturfühler vorgesehen ist, welcher ebenfalls an die Steuerung angeschlossen ist.

Eine zweite bevorzugte Ausführungsform der Vorrichtung zeichnet sich dadurch aus, daß im Abgasrohr ein 02-Sensor angeordnet ist, welcher an die Steuerung angeschlossen ist, und daß die Steuerung mit einem Sekundärluftgebläse in Wirkverbindung steht,mit welchem dem Brenner Sekundärluft zugeführt werden kann.

Weiterbildungen des Verfahrens ergeben sich aus den abhängigen Ansprüchen.

Die Erfindung soll nachfolgend anhand von Ausführungsbeispielen im Zusammenhang mit den Figuren näher erläutert werden. Es zeigen
- **Fig.1**: ein Schaltschema eines bevorzugten Ausführungsbeispiels einer Heizungsanlage nach der Erfindung, und
- **Fig.2**: das Blockschaltbild der mit den verschiedenen Sensoren, Stellgliedern und Anzeigen zusammenarbeitenden Steuerung nach Fig.1.

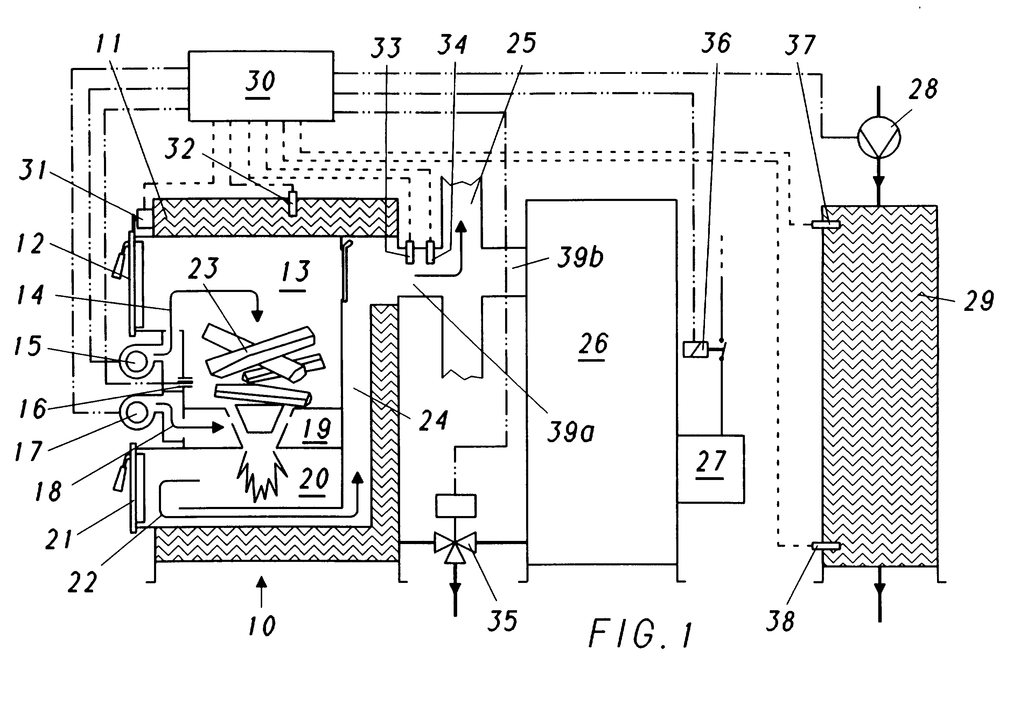

In Figur 1 ist ein Schaltschema eines bevorzugten Ausführungsbeispiels einer Heizungsanlage nach der Erfindung wiedergegeben. Zentraler Bestandteil der Anlage ist ein an sich bekannter Feststoffkessel 10, der über ein erstes Abgasrohr 39a an einen Kamin 25 angeschlossen ist. Der Feststoffkessel 10 umfaßt einen oberen Brennstoffraum 13 zur Aufnahme des Festbrennstoffs 23 (z.B. in Form von Holzscheiten), und eine darunterliegende Verbrennungskammer 20.

Brennstoffraum 13 und Verbrennungskammer 20 sind durch einen Brenner 19 getrennt, dessen detaillierter Aufbau aus einer der eingangs genannten Druckschriften entnommen werden kann und daher hier nicht näher beschrieben werden soll.

Der Brennstoffraum 13 ist von außen zum Befüllen mit Brennstoff durch eine Fülltür 12 zugänglich, die beim Öffnen bzw. Schließen einen Türschalter 31 betätigt. Der Brennstoffkammer kann weiterhin durch ein seitlich angeordnetes Primärluftgebläse 15 Primärluft 14 zugeführt werden, um die Verbrennung in der Brennstoffkammer 13 zu steuern. Im Bereich des Primärluftgebläses 15 ist in der Wand der Brennstoffkammer 13 vorzugsweise eine elektrische Zündeinrichtung 16 in Form einer elektrischen Heizung vorgesehen, durch welche ein Teil der Primärluft 14 hindurchtritt und als Heißluft zum Zünden des Brennstoffes verwendet werden kann. Unterhalb des Primärluftgebläses 15 ist ein Sekundärluftgebläse 17 angeordnet, mit dessen Hilfe Sekundärluft 18 in den Brenner eingespeist werden kann. Die Verbrennungskammer 20 ist durch eine Aschentür 21 von außen zugänglich, durch welche dei beim Verbrennen entstehende Asche entfernt werden kann. Die Verbrennungskammer 20 ist über eine Abgasführung 24 mit dem ersten Abgasrohr 39a verbunden. Brennstoffraum 13, Verbrennungskammer 20 und Abgasführung 24 sind von einem Wassermantel 11 umgeben, dessen Wasserinhalt durch Wärmeaustausch beim Verbrennungsvorgang erwärmt und zu Heizungszwecken weitergeleitet wird. Alternativ zum Wassermantel 11 kann auch ein Luftmantel vorgesehen werden, wenn die Heizung als Warmluftheizung ausgelegt ist. Die Wärme wird in diesem Fall in Form von Ausblasluft weitergeleitet.

Zur Steuerung und/oder Regelung der Verbrennung bzw. der Heizanlage sind im oder am Wassermantel 11 oder Luftmantel ein Kesseltemperaturfühler 32 und im ersten Abgasrohr 39a ein Abgastemperaturfühler 33 und ein O2-Sensor 34 angeordnet und an eine zentrale Steuerung 30 angeschlossen (die Anschlußleitungen der Meßfühler sind in Fig.1 durch gestrichelte Linien, die Leitungen zu den Stellgliedern als strichpunktierte Linien, dargestellt). Von der Steuerung verlaufen Steuerleitungen zu den beiden Gebläsen 15 und 17 und der elektrischen Zündeinrichtung 16. Die Steuerung 30 ist vorzugsweise als elektronische Mikroprozessorsteuerung ausgelegt. Als Meßdaten werden über den Fühler 32 die Kesseltemperatur (alternativ bei Lufterhitzern die Ausblaslufttemperatur), über den Fühler 33 die Abgas- bzw. Rauchgastemperatur und über den Sensor 34 der Restsauerstoffgehalt der Abgase gemessen. Als Fühler bzw. Sensoren können hierfür geeignete und bekannte Elemente verwendet werden.

Die gemessene Kesselwassertemperatur (bzw. Ausblaslufttemperatur) zeigt an, ob die erzeugte Leistung für den Heizungszweck ausreicht, zu gering oder zu hoch ist. Bei Nichterreichen des Sollwertes ist die Leistung zu gering, bei Überschreiten zu hoch und gerade richtig, wenn die Solltemperatur erreicht und gehalten wird. Die gemessene Abgastemperatur ihrerseits ist ein direktes Maß für die Leistung des Kessels (Warmlufterhitzers). Sie wird dazu verwendet, um eine ganz bestimmte Leistung des Wärmeerzeugers einzustellen:
1) Ziel der neuartigen Regelung ist es, die Leistung so einzustellen, daß die gewünschte Kesselwassertemperatur (bzw. Ausblaslufttemperatur) eingenommen und gehalten wird. Dies wird erreicht durch Einstellen eines Sollwertes der Abgastemperatur abhängig von der gemessenen Kesseltemperatur (Lufttemperatur). Liegt die gemessene Kesseltemperatur unterhalb eines vorgegebenen Sollwertes, wird der Sollwert der Abgastemperatur erhöht und umgekehrt (innerhalb vorgegebener Grenzen), oder ggf. gehalten. Auf diese Weise wird die Leistung des Wärmeerzeugers immer auf den jeweiligen Bedarf eingestellt.
2) Ziel ist es weiterhin, die angeforderte Leistung (Sollwert der Abgastemperatur) zu erreichen. Da die abgegebene Leistung von der erzeugten Gasmenge des Brennholzes abhängig ist, kann diese durch mehr oder weniger starkes Anfachen des brennenden Holzes im Brennstoffraum 13 gesteuert werden, d.h., durch mehr oder weniger Primärluft 14. Die Steuerung 30 mißt daher die Abgastemperatur und stellt danach durch entsprechende Steuerung des Primärluftgebläses 15 die Primärluftmenge ein.
3) Ziel der Regelung ist es schließlich, dafür zu sorgen, daß die Verbrennung möglichst vollständig ist und nur minimale Schadstoffemissionen frei werden. Der verwendete 02-Sensor 34 im Abgasrohr 39a zeigt an, ob die Verbrennung vollständig ist. Dazu wird der gemessene Wert der Sauerstoffkonzentration mit einem vorgegebenen Sollwert verglichen und durch die Steuerung 30 und das angeschlossene Sekundärluftgebläse 17 die Zufuhr von Sekundärluft 18 bei Sauerstoffmangel erhöht und umgekehrt.

Durch das Zusammenwirken von 1) und 2) kann die Leistung schnell, frühzeitig und vorausschauend dem Bedarf angepaßt werden. Durch 3) wird ständig, und zwar über die ganze Abbrandphase, eine vollständige, saubere und mit höchstmöglicher Holzausnutzung arbeitenden Holzverbrennung sichergestellt.

Die elektrische Zündeinrichtung 16 wird ebenfalls von der Steuer 30 angesteuert. Dabei einem Zündvorgang zugleich die Abgastemperatur gemessen werden kann, kann die Steuerung leicht feststellen, wann die Zündung erfolgreich abgeschlossen ist. Auf diese Weise lassen sich Fehlzündungen oder eine Überlastung der Zündeinrichtung 16 durch zu langen Zündbetrieb sicher vermeiden. Die Steuerung 30 kann weiterhin mit einer programmierbaren Zeitschaltung ausgestattet sein, mit welcher der Wärmeerzeuger zu einer vorher einprogrammierten Zeit gezündet werden kann und automatisch nach erfolgter Zündung zu regeln beginnt. Es ist somit möglich, eine Holzheizung durch zeitlich unabhängiges Vorbereiten zu einern vorbestimmten Zeit anzuwerfen. Bei Verwendung eines Mikroprozessors in der Steuerung 30 kann die Zeitschaltung mit Hilfe der internen Clockfrequenz softwaremäßig realisiert werden.

Im Ausführungsbeispiel der Fig. 1 ist weiterhin als zusätzlicher Wärmespeicher ein mit einem oder mehreren Temperaturfühlers 37,38 ausgestatteter Pufferspeicher 29 vorgesehen, der mittels einer angeschlossenen und von der Steuerung 30 gesteuerten Pufferladepumpe 28 aufladbar ist. Die Steuerung 30 ermittelt fortlaufend die im Pufferspeicher 29 herrschenden Wassertemperaturen und steuert nach Maßgabe der Meßwerte die Aufladung des Speichers und/oder die erforderliche Leistung des Feststoffkessels 10.

Vorteilhaft ist insbesondere der Ausbau der Regelung für die Steuerung von zwei Heizkesseln, wenn - wie in Fig.1 dargestellt - neben dem Feststoffkessel 10 ein weiterer Heizkessel, z.B. ein Oel/Gaskessel 26, über ein zweites Abgasrohr 39b an denselben Kamin 25 angeschlossen ist. Da vorschriftsmäßig nur z.Zt. nur eine Feuerstätte an einem Kamin betrieben werden darf, wird durch die Steuerung 30 grundsätzlich der Oel/Gaskessel 26 abgeschaltet, wenn der Abgastemperaturfühler 33 am Feststoffkessel 10 dessen Betrieb detektiert. Wichtig ist dabei allerdings eine ausreichende Eigensicherheit, d.h. eine sichere Vermeidung des Doppelbetriebs auch bei jeglichen Störungen.

Eine solche Eigensicherheit wird hier durch die Einbeziehung des Türschalters 31 in die Steuerung/Regelung erreicht.

Die Arbeitsweise ist die folgende: Der Oel/Gasbrenner 27 des Oel/Gaskessels 26 wird eingeschaltet, wenn der Feststoffkessel 10 aus (kalt) ist. Eine Unterbrechung des (externen) Oel/Gasbrenners 27 setzt ein, wenn der Abgastemperaturfühler 33 im Rauchgas des Feststoffkessels Wärme fühlt (z.B. eine Temperatur von 70^{o}C) oder/und wenn der Türschalter 31 an der Fülltür 12 diese als offen meldet. Die Steuerung des Oel/Gasbrenners 27 erfolgt dabei über ein an die Steuerung 30 angeschlossenes Brennerrelais 36, welches beim Betrieb des Brenners angezogen ist, jedoch beim Ausfall des Systems abfällt und den Brenner sperrt. Gleichzeitig mit dem wechselnden Betrieb der beiden Kessel 10,26 kannüber ein an die Steuerung 30 angeschlossenes hydraulisches Ventil, z.B. ein 3-Wege-Ventil 35, der Wasserstrom des Heizkreislaufs zwischen den Kesseln umgeschaltet werden.

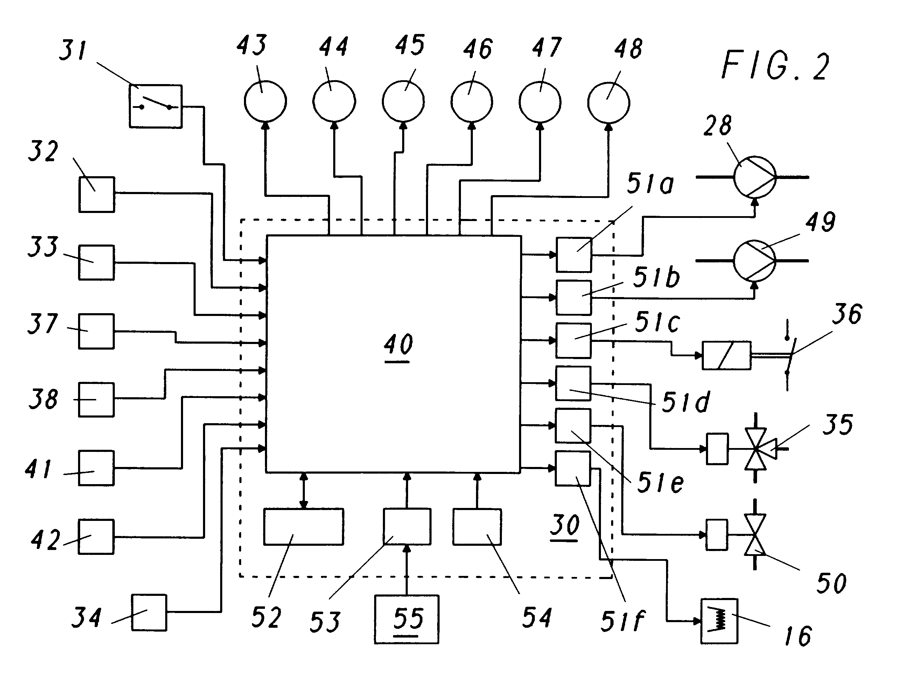

Die Steuerung 30 kann mit den angeschlossenen externen Funktionsblöcken in der in Fig.2 dargestellten Weise aufgebaut sein. Herzstück der Steuerung ist ein Mikroprozessor 40, der mit mehreren peripheren Bausteinen, z.B. einem Datenspeicher 52 und einem mit einer Programmeingabevorrichtung 55 in Verbindung stehenden Programmspeicher 53 zusammenarbeitet und von einer Clockschaltung 54 taktgesteuert wird. Auf der Eingabeseite ist der Mikroprozessor 40 mit den verschiedenen Fühlern und Sensoren verbunden, welche den Türkontakt 31, den Kesseltemperaturfühler oder Warmlufttemperaturfühler 32, den Abgastemperaturfühler 33, die beiden Temperaturfühler 37,38 des Pufferspeichers 29 sowie wahlweise einen Heizungstemperaturfühler 41 oder Raumtemperaturfühler 42 und den 02-Sensor 34 umfassen. Mit Hilfe des Heizungs- und/oder Raumtemperaturfühlers 41 bzw. 42 und einer regelbaren Heizungspumpe 49 oder eines Mischventils 50 kann eine Aussentemperatursteuerung zur Regelung der Gebäudeinnentemperatur realisiert werden.

Die Ansteuerung der Stell- und Regelelemente (Pufferladepumpe 29, Heizungspumpe 49, Brennerrelais 39, 3-Wege-Ventil 35, Mischventil 50 und Zündeinrichtung 16) erfolgt durch den Mikroprozessor 40 mittels entsprechend ausgelegter Leistungsteile 51a,..,f. In derselben Weise (in Fig.2 aus Platzgründen jedoch nicht dargestellt) werden die beiden Gebläse 15,17 angesteuert. Die Steuerung 30 steuert schließlich auch eine Mehrzahl von Anzeigen an, wie z.B. eine Wirkungsgradanzeige 43, eine CO2-Anzeige 44, eine Brenndaueranzeige 45, eine Betriebsstundenanzeige 46, eine Leistungsanzeige 47 und eine Kesseltemperaturanzeige 48. Weitere Anzeigen können je nach Bedarf hinzugefügt werden.

Es kann auch eine Solarheizungsregelung möglich sein.

Insgesamt ergibt sich mit der Erfindung eine Heizungsregelung für eine mit einem Feststoffkessel ausgestattete Heizanlage, die vor allem die bei Verwendung von Holzbrennstoff auftretenden Schwankungen und Änderungen in den Verbrennungsbedingungen sicher ausregelt, flexibel eingesetzt und erweitert werden kann, und eine optimale Ausnutzung des Brennstoffes bei gleichzeitig minimierter Schadstoffemission gewährleistet.

### Bezugszeichenliste:

- 10: Feststoffkessel
- 11: Wassermantel
- 12: Fülltür
- 13: Brennstoffraum
- 14: Primärluft
- 15: Primärluftgebläse
- 16: Zündeinrichtung
- 17: Sekundärluftgebläse
- 18: Sekundärluft
- 19: Brenner
- 20: Verbrennungskammer
- 21: Aschentür
- 22: Abgas
- 23: Festbrennstoff (Holz)
- 24: Abgas führung
- 25: Kamin
- 26: Oel/Gaskessel
- 27: Oel/Gasbrenner
- 28: Pufferladepumpe
- 29: Pufferspeicher
- 30: Steuerung
- 31: Türschalter
- 32: Kesseltemperaturfühler
- 33: Abgastemperaturfühler
- 34: 02-Sensor (Lambda-Sonde)
- 35: 3-Wege-Ventil
- 36: Brennerrelais
- 37,38: Temperaturfühler (Puffer)
- 39a,b: Abgasrohr
- 40: Mikroprozessor
- 41: Heizungstemperaturfühler
- 42: Raumtemperaturfühler
- 43: Wirkungsgradanzeige
- 44: CO2-Anzeige
- 45: Brenndaueranzeige
- 46: Betriebsstundenanzeige
- 47: Leistungsanzeige
- 48: Kesseltemperaturanzeige
- 49: Heizungspumpe
- 50: Mischventil
- 51a,..,f: Leistungsteil
- 52: Datenspeicher
- 53: Programmspeicher
- 54: Clockschaltung
- 55: Programmeingabevorrichtung

## Patentansprüche

1. Verfahren zum Steuern und/oder Regeln einer mit einem Feststoffkessel (10) ausgerüsteten Heizungsanlage, in welchem Feststoffkessel (10) durch Verbrennung eines Festbrennstoffes (23), vorzugsweise Holz, unter Zuführung von Primärluft (14) und unter Bildung von Abgas (22) Kesselwasser und/oder Ausblasluft mit einer bestimmten Nutztemperatur erzeugt wird,
dadurch gekennzeichnet,
daß der Istwert der Abgastemperatur gemessen wird, daß die Verbrennung im Feststoffkessel (10) so geregelt wird, daß ein vorgegebener Sollwert der Abgastemperatur erreicht und eingehalten wird, daß zur Regelung der Verbrennung im Feststoffkessel (10) die Menge der zugeführten Primärluft (14) verändert wird, daß auch der Istwert der Nutztemperatur gemessen wird, und daß bei fortdauernden Abweichungen des Istwertes der Nutztemperatur von einem vorgegebenen Sollwert nach unten bzw. oben der Sollwert der Abgastemperatur erhöht bzw. erniedrigt wird.

2. Verfahren nach Anspruch 1,
dadurch gekennzeichnet,
daß zur Nachverbrennung unverbrannter Brenngase dem Feststoffkessel (10) zusätzlich Sekundärluft (18) zugeführt wird, daß die Sauerstoffkonzentration im Abgas (22) gemessen wird und daß bei einer andauernden Abweichung des Istwertes der Sauerstoffkonzentration von einem vorgegebenen Sollwert nach unten bzw. oben die Zufuhr von Sekundärluft (18) erhöht bzw. erniedrigt wird.

3. Verfahren nach einem der Ansprüche 1 oder 2,
dadurch gekennzeichnet,
daß zum Anwerfen des Feststoffkessels (10) der Festbrennstoff (23) elektrisch gezündet wird, und daß der Zündvorgang beendet wird und die Verbrennungsregelung einsetzt, wenn der Istwert der Abgastemperatur das Vorliegen einer selbständigen Verbrennung anzeigt.

4. Verfahren nach Anspruch 3,
dadurch gekennzeichnet,
daß die Zündung zu einem voreingestellten (programmierbaren) Zeitpunkt erfolgt.

5. Verfahren nach einem der Ansprüche 1 bis 4,
dadurch gekennzeichnet,
daß zum Speichern der im Feststoffkessel (10) erzeugten Wärmeenergie ein mit wenigstens einem Temperaturfühler (37,38) ausgestatteter, aufladbarer Pufferspeicher (29) verwendet wird, daß die Ist-Temperatur im Pufferspeicher (29) fortlaufend gemessen wird, und daß nach Maßgabe der Ist-Temperatur die Aufladung des Pufferspeichers gesteuert und/oder der Sollwert der Abgastemperatur eingestellt wird.

6. Verfahren nach Anspruch 1,
dadurch gekennzeichnet,
daß die Raumtemperatur und/oder die Heizungstemperatur gemessen und der Sollwert der Nutzungstemperatur nach Maßgabe der gemessenen Temperaturen eingestellt wird.

7. Verfahren nach einem der Ansprüche 1 bis 6,
dadurch gekennzeichnet,
daß neben dem Feststoffkessel (10) wenigstens ein weiterer Kessel, vorzugsweise ein Oel/Gaskessel (26), verwendet wird, wobei die wenigstens zwei Kessel an denselben Kamin (25) angeschlossen sind, und daß der Betrieb des weiteren Kessels nach Maßgabe des Betriebszustandes des Feststoffkessels (10) erfolgt.

8. Verfahren nach Anspruch 7,
dadurch gekennzeichnet,
daß der weitere Kessel nur dann eingeschaltet wird, wenn die gemessene Abgastemperatur am Feststoffkessel (10) anzeigt, daß der Feststoffkessel (10) ausgeschaltet ist.

9. Verfahren nach Anspruch 7,
dadurch gekennzeichnet,
daß die Stellung einer Fülltür (12) am Feststoffkessel (10) überwacht wird, und daß der weitere Kessel abgeschaltet wird, wenn die gemessene Abgastemperatur am Feststoffkessel (10) einen vorgegebenen Wert überschreitet und/oder die Fülltür (12) als offenstehend gemeldet wird.

10. Verfahren nach Anspruch 7,
dadurch gekennzeichnet,
daß der Heizkreislauf auf denjenigen der beiden Kessel umgestellt wird, welcher gerade in Betrieb ist.

## Claims

1. Method for the control and/or regulation of heating facilities equipped with a solid matter boiler (10), in which solid matter boiler (10), by the combustion of a solid fuel (23), by preference wood, while primary air (14) is supplied and while waste gas (22) is formed, boiler feed water and/or exhauset air is produced at a specific service temperature,
**characterized in that**
the actual value of the waste gas temperature is measures, in that the combustion in the solid matter boiler (10) is regulated in such a way that a predetermined required value of the waste gas temperature is reached and maintained, in that, for the regulation of the combustion in the solid matter boiler (10), the volume of the supplied primary air (14) is changed, in that also the actual value of the service temperature is measured and in that, in the case of continuous downward or upward deviations of the actual value of the service temperature from a predetermined required value, the required value of the waste gas temperature is increased or decreased, respectively.

2. Method according to Claim 1,
**characterized in that,**
for the post-combustion of non-combusted fuel gases, secondary air (18) is additionally supplied to the solid matter boiler (10), in that the oxygen concentration in the waste gas (22) is measured and in that, in the event of a continual deviation of the actual value of the oxygen concentration upwardly or downwardly from a predetermined required value, the supply of secondary air (18) is increased or decreased, respectively.

3. Method according to either Claim 1 or 2,
**characterized in that,**
for starting the solid matter boiler (10), the solid fuel (23) is ignited electrically and in that the ignition operation is terminated and the combustion regulation started when the waste gas temperature indicates the existence of an independent combustion.

4. Method according to Claim 3,
**characterized in that**
the ignition takes place at a preset (programmable) time.

5. Method according to any of Claims 1 to 4,
**characterized in that,**
for the storage of the thermal energy generated in the solid matter boiler (10), a chargeable buffer storage means (29) equipped with at least one temperature sensor (37,38) is employed, in that the actual temperature in the buffer storage means (29) is continuously measured and in that, in accordance with the actual temperature, the charging of the buffer storage means (29) is controlled and/or the required value of the waste gas temperatures adjusted.

6. Method according to Claim 1,
**characterized in that**
the room temperature and/or the heating temperature is measured and the required value of the service temperature is adjusted according to the measured temperatures.

7. Method according to any of Claims 1 to 6,
**characterized in that,**
apart from the solid matter boiler (10), at least one further boiler, by preference an oil/gas boiler (26) is employed, in which case the at least two boilers are connected to the same chimney (25) and in that the operation of the further boiler takes place in accordance with the operating state of the solid matter boiler (10).

8. Method according to Claim 7,
**characterized in that**
the further boiler is turned on only when the measured waste gas temperature on the solid matter boiler (10) indicates that the solid matter boiler (10) is turned off.

9. Method according to Claim 7,
**characterized in that**
the position of a filling door (12) on the solid matter boiler (10) is monitored and in that the further boiler is turned off when the measured waste gas temperature on the solid matter boiler (10) exceeds a predetermined value and/or when it is indicated that the filling door (12) is open.

10. Method according to Claim 7,
**characterized in that**
the heating circuit is changed over to that one of the two boilers which is in operation just then.

## Revendications

1. Procédé pour la commande et/ou la régulation d'une installation de chauffage équipée d'une chaudière à matières solides (10), chaudière à matières solides (10) dans laquelle, par combustion d'un combustible solide (23), de préférence du bois, en ajoutant de l'air primaire (14) et en formant du gaz perdu (22) de l'eau de chaudière et/ou de l'air de purge est produit avec une certaine température utile,
caractérisé en ce
que la valeur effective de la température du gaz perdu est mesurée, que la combustion dans la chaudière à matières solides (10) est réglée de telle manière qu'une valeur de consigne prédéfinie de la température du gaz perdu est obtenue et maintenue, que, pour la régulation de la combustion dans la chaudière à matières solides (10), la quantité de l'air primaire amené (14) est modifiée, que la valeur effective de la température utile est également mesurée et que, pour des écarts persistants de la valeur effective de la température utile par rapport à une valeur de consigne prédéfinie vers le bas ou vers le haut, la valeur de consigne de la température du gaz perdu est augmentée ou baissée.

2. Procédé selon la revendication 1,
caractérisé en ce
que, pour la postcombustion de gaz de combustion imbrûlés, de l'air secondaire (18) est amené en plus à la chaudière à matières solides (10), que la concentration en oxygène dans le gaz perdu (22) est mesurée et que, pour un écart persistant de la valeur effective de la concentration en oxygène par rapport à une valeur de consigne prédéfinie vers le bas ou vers le haut, l'amenée d'air secondaire (18) est augmentée ou diminuée.

3. Procédé selon l'une des revendications 1 ou 2,
caractérisé en ce
que, pour mettre en marche la chaudière à matières solides (10), le combustible solide (23) est allumé électriquement et que la processus d'allumage est terminé et la régulation de la combustion commence, lorsque la valeur effective de la température du gaz perdu indique l'existence d'une combustion indépendante.

4. Procédé selon la revendication 3,
caractérisé en ce
que l'allumage se fait à un moment préréglé (progammable).

5. Procédé selon l'une des revendications 1 à 4,
caractérisé en ce
que, pour accumuler l'énergie thermique produite dans la chaudière à matières solides (10), on utilise un réservoir d'accumulation (29) rechargeable, équipé d'au moins une sonde de température (37, 38), que la température effective est mesurée en continue dans le réservoir d'accumulation (29) et qu'après détermination de la température effective, le rechargement du réservoir d'accumulation est commandé et/ou la valeur de consigne de la température du gaz perdu est réglée.

6. Procédé selon la revendication 1,
caractérisé en ce
que la température ambiante et/ou la température du chauffage est mesurée et la valeur effective de la température utile est réglée après détermination des températures mesurées.

7. Procédé selon l'une des revendications 1 à 6,
caractérisé en ce
qu'en plus de la chaudière à matières solides (10) au moins une autre chaudière, de préférence une chaudière à mazout/à gaz (26) est utilisée, les deux chaudières qui existent au moins étant raccordées à la même cheminée (25) et que le fonctionnement de l'autre chaudière se fait après détermination de l'état de service de la chaudière à matières solides (10).

8. Procédé selon la revendication 7,
caractérisé en ce
que l'autre chaudière n'est mise en circuit que lorsque la température du gaz perdu mesurée sur la chaudière à matières solides (10) indique que la chaudière à matières solides (10) est mise hors circuit.

9. Procédé selon la revendication 7,
caractérisé en ce
que la position d'une porte de remplissage (12) sur la chaudière à matières solides (10) est contrôlée et que l'autre chaudière est mise hors circuit, lorsque la température du gaz perdu mesurée sur la chaudière à matières solides (10) dépasse une valeur prédéfinie et/ou la porte de remplissage (12) est signalée comme étant ouverte.

10. Procédé selon la revendication 7,
caractérisé en ce
que le circuit de chauffage est changé sur celle des deux chaudières qui est justement en circuit.
